# EUROPÄISCHE PATENTSCHRIFT

(11) **EP 2 641 213 B1**
(45) Veröffentlichungstag und Bekanntmachung des Hinweises auf die Patenterteilung: **18.10.2017**
(21) Anmeldenummer: 11802335.7
(22) Anmeldetag: 12.12.2011
(51) Int. Cl.: G06K 19/077, G06K 19/067

(54) **VERFAHREN UND VORRICHTUNG ZUR HERSTELLUNG VON INDIVIDUELL CODIERTEN LESESTRUKTUREN**
METHOD AND DEVICE FOR PRODUCING INDIVIDUALLY CODED READING STRUCTURES
PROCÉDÉ ET DISPOSITIF DE FABRICATION DE STRUCTURES DE LECTURE CODÉES INDIVIDUELLEMENT

(43) Veröffentlichungstag der Anmeldung: 25.09.2013
(73) Patentinhaber: Ev Group E. Thallner GmbH, 4782 St. Florian am Inn (AT)
(72) Erfinder: KREINDL, Gerald, A-4782 Schärding (AT); GLINSNER, Thomas, A-4782 St. Florian (AT)
(74) Vertreter: Schweiger, Johannes
(86) Internationale Anmeldenummer: PCT/EP2011/072476
(87) Internationale Veröffentlichungsnummer: WO 2013/087089

(56) Entgegenhaltungen:
- JP-A- 2007 281 708
- US-A1- 2010 269 319

## Beschreibung

Die vorliegende Erfindung betrifft eine Vorrichtung zur Herstellung von individuell codierten Lesestrukturen gemäß Patentanspruch 1, ein entsprechendes Verfahren gemäß Patentanspruch 9 sowie eine durch das Verfahren hergestellte Lesestruktur gemäß Patentanspruch 15. Die erfindungsgemäßen Lesestrukturen finden insbesondere Verwendung als Bauelemente von RFID-Chips.

RFID Bauelemente werden zunehmend bedeutender. Der Vorteil von RFID Bauelementen in Gegensatz zu den noch immer weit verbreiteten Strichcodes (Barcodes) besteht darin, dass sie elektronisch ohne direkten Sichtkontakt ausgelesen werden können und mit zunehmendem Maße äußerst kosteneffektiv mit immer komplexeren Baugruppen verbunden werden können. So waren beispielsweise die ersten RFID Bauelemente einfache Transponder, die auf ein einkommendes Signal ein Antwortsignal lieferten. Heutzutage geht die Entwicklung in Richtung von RFID Komponenten, die ohne Stromversorgung nur durch die Induktion der elektromagnetischen Strahlung eines Hochfrequenzsignals sogar zusammen mit anderen funktionellen Baugruppen betrieben werden können. Genannt seien hier vor allem Speicherbausteine, die programmiert und ausgelesen werden können. Moderne RFID Bauelemente besitzen eine Spule, mit Vorzug eine Flachspule, einen Gleichrichter zur Umwandlung des Wechselstromsignals in einen Gleichstrom, sowie oben genannten funktionelle Baugruppen.

In den frühen Jahren wurde die RFID Technologie bereits in der Industrie eingesetzt, um Waren in einer Produktionskette zu markieren. Ein Halbzeug bekam ein RFID-"Etikett" und konnte bis zum endgültigen Einbau innerhalb eines Werkes verfolgt, registriert und kontrolliert werden. Des Weiteren fand die RFID Technologie auch Einzug in Einzelhandelsketten, bei denen Waren mittels RFID gegen Diebstahl geschützt wurden. Durch die zunehmende Miniaturisierung werden diese Bauelemente nicht nur mit mehr Funktionen ausgestattet, sondern auch zunehmend kleiner und gleichzeitig billiger.

Eines der Hauptprobleme stellt die "Kodierung" der sogenannten Code-Reflektoren (Resonator) dar. Jedes RFID Bauelement hat eine eigene "Nummer" (Codierung), welche ausgelesen werden kann. Die Nummer ist dabei nicht softwaremäßig in einem Speicher vorhanden, der ausgelesen werden muss, sondern physikalisch in einem Code-Reflector kodiert. Die einkommende elektromagnetische "Lesewelle" induziert dabei in einer (Flach)spule einen Strom, der den RFID Stromkreis speist. Der Resonator "liefert" als Antwortsignal ein kodiertes analoges und/oder digitales Signal zurück, welches über die Antenne abgestrahlt wird. Die Resonatoren bestehen, primitiv gesprochen, aus Linienstrukturen. Durch Vorsehen von Linienstrukturen an bestimmten Stellen können die Resonanzfrequenzen eingestellt werden. Das Problem besteht darin, dass auf einem Wafer mehrere RFID-Chips beziehungsweise Resonatoren produziert werden, um kostengünstig eine Vielzahl von Resonatoren herstellen zu können. Natürlich muss jeder der RFID Chips eine eigene "Kennung", also einen eigenen und vor allem einzigartigen Code Resonator besitzen. Man könnte natürlich eine Maske herstellen, die diesem Umstand gerecht wird, indem an jeder Chipposition einfach ein entsprechendes Muster in der Maske vorgesehen wird. Allerdings wäre der Aufwand, eine Maske pro Wafer zu erstellen, unverhältnismäßig. Da es bisher keine Möglichkeit gibt, "dynamisch veränderliche Masken" zu produzieren, muss der Produktionsprozess der Resonatoren getrennt von den anderen Strukturen des Chips erfolgen.

Bis heute verwendet man zur Herstellung von Resonatoren lithographische Methoden, bei denen die Linienstrukturen einzeln erzeugt werden. Technische Probleme bereitet die Auflösung, die durch das Verhältnis der Wellenlänge zur Apertur einen beschränkenden Faktor darstellt. Je kleiner die Strukturen, desto kleiner müssen auch die Wellenlängen, und desto komplizierter die lithographischen Anlagen sein, was zu einer entsprechenden Kostenexplosion führt.

Eine Vorrichtung zur Herstellung von Lesestrukturen ist beispielsweise aus der US2010/0269319 A1 bekannt.

Aufgabe der vorliegenden Erfindung ist es daher, die Herstellung von individuell kodierten Lesestrukturen zu vereinfachen und damit kostengünstigere RFID-Chips zur Verfügung zu stellen.

Diese Aufgabe wird mit den Merkmalen der Patentansprüche 1 und 3 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Den angegebenen Wertebereichen sollen auch innerhalb der genannten Grenzen liegende Werte als Grenzwerte offenbart und in beliebiger Kombination beanspruchbar sein.

Grundgedanke der vorliegenden Erfindung ist es, zunächst eine, insbesondere einheitliche, einfach herzustellende Grundstruktur auf einem Trägersubstrat auszubilden und auf Basis dieser Grundstruktur anschließend durch Bearbeitung der Grundstruktur eine individuell kodierte Lesestruktur auszubilden. Somit kann für die Herstellung der Grundstruktur auf Standardverfahren zurückgegriffen werden, so dass trotz des Vorsehens mehrerer Schritte bis zur Herstellung der Lesestruktur eine verglichen mit dem Stand der Technik kostengünstigere Herstellung ermöglicht wird.

Als eigenständige Erfindung ist daher eine Vorrichtung zur Herstellung von individuell kodierten Lesestrukturen, insbesondere Resonatoren, mit folgenden Merkmalen vorgesehen:
- eine Strukturierungseinrichtung, insbesondere in Form einer Lithographieanlage, zur Erzeugung einer Grundstruktur mit mindestens einer Gruppe von Einzelstrukturen auf einem Trägersubstrat und
- eine, insbesondere aus mehreren Einrichtungen bestehende, Bearbeitungseinrichtung zur Ausbildung mindestens einer jeweils individuell kodierten Lesestruktur mit Leseelementen aus einer selektierten oder selektierbaren Teilmenge einer Gesamtmenge der Einzelstrukturen jeder Gruppe.

Gemäß der Erfindung ist außerdem vorgesehen, dass die Bearbeitungseinrichtung Aufbringmittel zur zumindest teilweisen Bedeckung einer nicht selektierten Restmenge der Gesamtmenge der Einzelstrukturen jeder Gruppe mit einem Fluid, insbesondere einem Polymer, aufweist. Somit kann durch gezielte Ansteuerung der Aufbringmittel die Ausbildung von Leseelementen beziehungsweise einer Lesestruktur auf den bedeckten Einzelstrukturen verhindert werden. Dies führt zu einer deutlichen Vereinfachung und kostengünstigeren Herstellung der Lesestrukturen.

Soweit die Aufbringmittel mindestens einen, insbesondere eine Düse aufweisenden, Dispenser, insbesondere Nanodispenser, aufweisen, ist eine exakte und zügige Dosierung selbst kleinster Fluidmengen möglich. Gemäß der Erfindung ist vorgesehen, dass die Strukturierungseinrichtung, insbesondere als Prägeeinrichtung, die Einzelstrukturen abwechselnd als Vertiefungen und, insbesondere durch Ausbildung der Vertiefungen gebildete, Erhebungen erzeugend ausgebildet ist. Die Einzelstrukturen lassen sich auf diese Art und Weise besonders kostengünstig und mit kleinsten Abmessungen herstellen. Die Vorrichtung ist so eingerichtet, dass jedes Leseelement an je einer Einzelstruktur, insbesondere ausschließlich an je einer Vertiefung, ausgebildet wird, ist die Bedeckung der jeweiligen, nicht selektierten Einzelstruktur besonders einfach und sicher umzusetzen.

Erfindungsgemäß ist es außerdem denkbar, dass die Bearbeitungseinrichtung, insbesondere durch Ätzen wirkende, Reduzierungsmittel zur, insbesondere gleichmäßigen, Reduzierung der Dicke D₁ der Grundstruktur, insbesondere mindestens um eine Höhe h der Vertiefungen (von dem Trägersubstrat), aufweist. Somit wird die Oberfläche der Vertiefungen nach Reduzierung/Abtragung durch das Trägersubstrat gebildet, so dass in den Vertiefungen anschließend eingebrachtes Material für die Ausbildung der Lesestruktur direkt mit dem Trägersubstrat verbunden werden kann.

In einer weiteren, vorteilhaften Ausführungsform der Erfindung kann vorgesehen sein, dass die Bearbeitungseinrichtung Beschichtungsmittel zur, insbesondere vollflächigen, Beschichtung, insbesondere Abscheidung, eines zumindest teilweise die Lesestruktur bildenden Beschichtungsmaterials auf die Gruppen oder die Grundstruktur aufweist. Das Beschichtungsmaterial lässt sich hierdurch auf einfache Art und Weise vollflächig auftragen, wobei nicht selektierte Einzelstrukturen durch die Bedeckung mit dem Fluid an einer Beschichtung gehindert werden. Die nicht selektierten Einzelstrukturen werden somit nicht beschichtet.

Mit Vorteil weist die Bearbeitungseinrichtung Mittel zum, insbesondere vollständigen, Lösen der, insbesondere durch die Reduziermittel reduzierten, Grundstruktur von dem Trägersubstrat auf. Somit verbleibt auf dem Trägersubstrat nunmehr die in den selektierten Einzelstrukturen, insbesondere Vertiefungen, aufgebrachte Beschichtung, so dass sich eine individuelle Lesestruktur aus den selektierten Einzelstrukturen ergibt, die darüber hinaus eine klare Abgrenzung zwischen den einzelnen Leseelementen erlaubt und besonders dünn ausgebildet sein kann.

Als eigenständige Erfindung ist ein Verfahren gemäß Anspruch 3 vorgesehen. Soweit vorrichtungsgemäße Merkmale beschrieben worden sind, sollen diese auch als verfahrensgemäße Merkmale offenbart gelten.

Weiterhin betrifft die vorliegende Erfindung eine durch die beschriebene Vorrichtung und das beschriebene Verfahren hergestellte Lesestruktur.

Die Erfindung betrifft nicht nur auf die Herstellung von RFID Resonatoren, sondern allgemein die Produktion individuell kodierter mechanischelektronischer binärer Strukturen. Gemäß der Erfindung können Geräte mit einer Seriennummer versehen werden, um sie eindeutig zu kennzeichnen. Diese Seriennummern werden im Stand der Technik vorwiegend elektronisch gespeichert, insbesondere in Flash Speichern permanent, oder semipermanent gespeichert. Diese Speicher können allerdings manipuliert, ausgetauscht oder verändert werden. Somit erlaubt die erfindungsgemäße Ausführungsform die Herstellung individuell codierbarer Strukturen in einem Massenfertigungsprozess. Die Anwendung dieser Strukturen kann, wie an einigen bevorzugten Ausführungsformen aufgezeigt, vielfältig sein. Weitere Vorteile, Merkmale und Einzelheiten der Erfindung ergeben sich aus der nachfolgenden Figurenbeschreibung. Die Figuren zeigen jeweils in schematischer und stark vergrößerter Darstellung:
- Figur 1: eine ausschnittsweise Querschnittsansicht eines Trägersubstrats mit einer erfindungsgemäßen Grundstruktur,
- Figur 2: eine schematische Darstellung von über der Grundstruktur angeordneten und ausrichtbaren Aufbringmittels,
- Figur 3: die erfindungsgemäße Aufbringung eines Fluids auf die Grundstruktur,
- Figur 4: einen erfindungsgemäßen Schritt der Reduzierung/Abtragung der Dicke D₁ der Grundstruktur,
- Figur 5: einen erfindungsgemäßen Schritt der Beschichtung der Grundstruktur und
- Figur 6: einen erfindungsgemäßen Schritt des Lösens der Grundstruktur.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleichwirkender Funktion mit identischen Bezugszeichen gekennzeichnet sind.

In den Figuren sind die erfindungsgemäßen Merkmale nicht maßstabsgetreu dargestellt, um die Funktion der einzelnen Merkmale überhaupt darstellen zu können. Auch die Verhältnisse der einzelnen Bauteile können jeweils unverhältnismäßig sein, was insbesondere auf stark vergrößert dargestellte Einzelstrukturen 4e, 4v zurückzuführen ist.

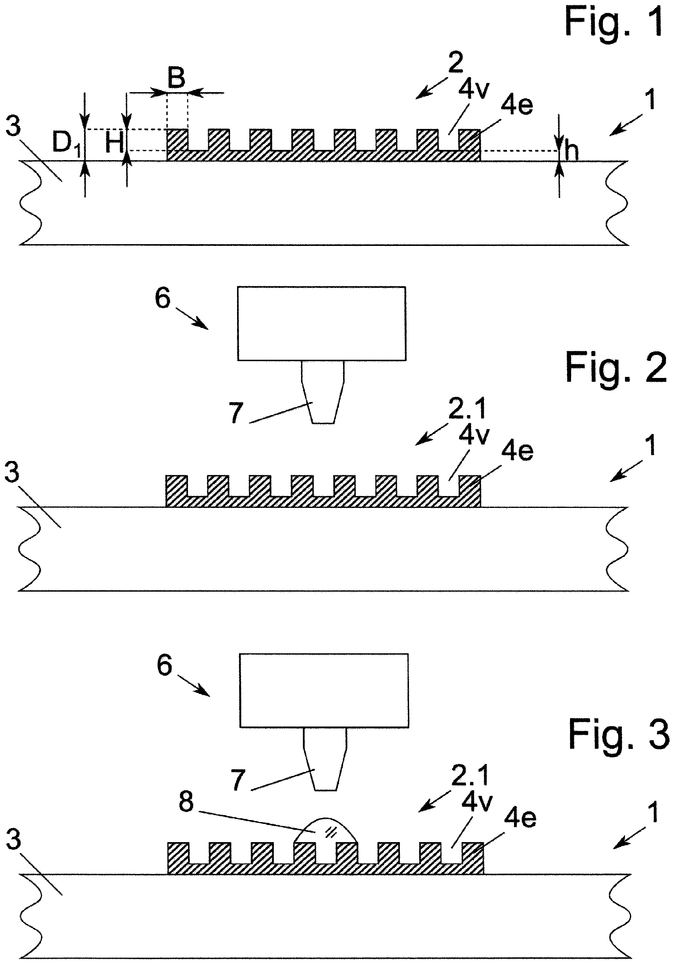

In Figur 1 ist ein Trägersubstrat 3, insbesondere in Form eines Wafers, ausschnittsweise dargestellt, und zwar ein Ausschnitt mit einer Gruppe 2.1 von Einzelstrukturen 4v, 4e auf einer Oberfläche 3o des Trägersubstrat zumindest temporär fixiert. Auf dem Trägersubstrat 3 ist eine Vielzahl von Gruppen 2.1 bis 2.n vorgesehen, die gemeinsam eine Grundstruktur 2 bilden. Diese kann auch als durchgehende Grundstruktur 2, insbesondere durch Nanoimprinten, aufgebracht werden, so dass die Gruppen 2.1 bis 2.n zunächst nicht sichtbar unterschieden werden können, sondern erst durch späteres Trennen/Aufteilen getrennt werden.

Die Grundstruktur 2 besteht aus den Einzelstrukturen, die wiederum auf Vertiefungen 4v und durch Ausbildung der Vertiefungen 4v gebildeten Erhebungen 4e besteht. Die Grundstruktur 2 weist eine möglichst homogene, mittlere Dicke D₁ auf. Die Vertiefungen 4v erstrecken sich über eine Höhe h von dem Trägersubstrat 3. Die Vertiefungen 4v werden von den Erhebungen 4e um eine Höhe H überragt und weisen eine, insbesondere einheitliche, Breite B auf. Die Erhebungen 4e können in der Tiefe verschiedene Längen aufweisen, insbesondere als Streifen ausgebildet sein.

In Figur 2 ist ein Aufbringmittel 6 in Form eines Nanodispensersystems zur Aufbringung eines Fluids 8 über mindestens eine Düse 7 gegenüber der Grundstruktur 2 anordenbar. Die Aufbringung erfolgt sowohl örtlich als auch mengenmäßig exakt gesteuert, insbesondere durch eine zentrale Steuerungseinrichtung.
Das Aufbringmittel 6 besitzt in einer besonderen Ausführungsform mehrere Düsen 7, also eine Art Düsenarray aus mehreren Düsen 7. Die Düsen 7 sind mit Vorzug einzeln ansteuerbar und können somit mehrere Tropfen gleichzeitig abscheiden. Der Abstand zwischen den Düsen ist insbesondere gleich dem Abstand zwischen den Vertiefungen 4v, mit Vorzug individuell einstellbar, insbesondere gesteuert durch eine zentrale Steuereinrichtung.

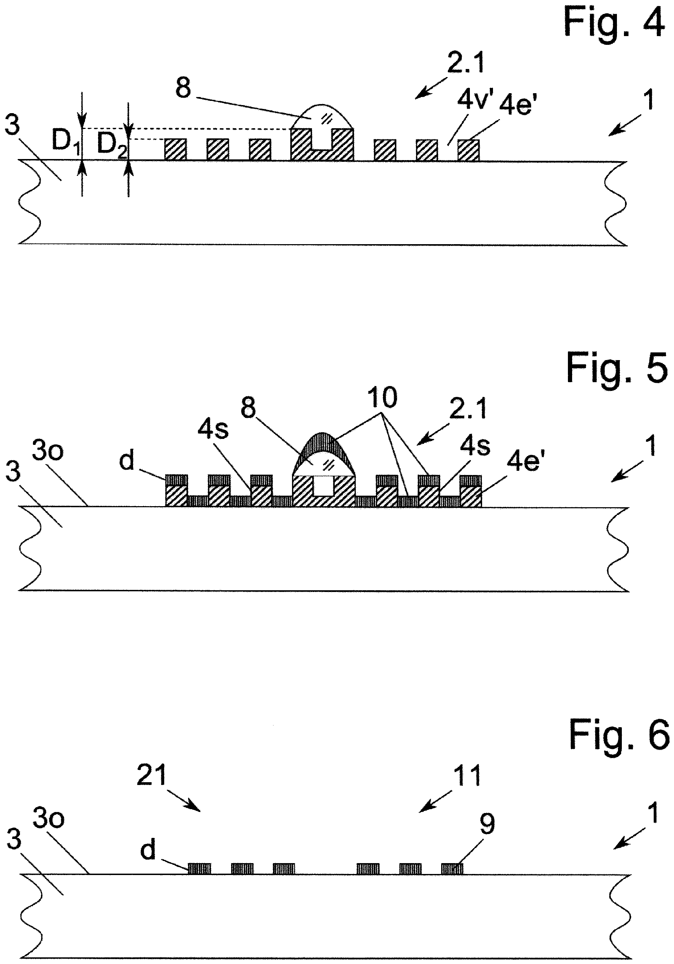

Zur Ausbildung von individuell kodierten Lesestrukturen 11 (siehe Figur 6) werden durch die Aufbringmittel nicht selektierte Vertiefungen 4v mit Fluid, insbesondere in Tropfenform aufgebracht, bedeckt. Das Fluid 8 ist ein Polymer, wobei das Volumen des aufgebrachten Fluids weniger als 100 µl, insbesondere weniger als 100 nl, noch bevorzugter weniger als 10 nl, vorzugsweise weniger als 1 nl beträgt. Eine Vielzahl von Tropfen wird an entsprechenden, nicht selektierten Vertiefungen 4v aufgebracht. Die Verteilung der nicht selektierten Vertiefungen ergibt später eine individuelle Lesestruktur 11. Die Selektion kann insbesondere zufallsgesteuert sein.

Die Aufbringung der Tropfen erfolgt insbesondere entlang der gesamten Grundstruktur 2, also für eine Vielzahl von Gruppen 2.1 bis 2.n, wobei für jede Gruppe 2.1 bis 2.n ein unterschiedliches Muster für die Tropfenaufbringung vorgesehen ist.

In dem in Figur 4 gezeigten Verfahrensschritt wird durch Reduzierungsmittel ein Teil der freiliegenden Außenkontur der Grundstruktur 2, insbesondere gleichmäßig an der gesamten freiliegenden Oberfläche der Außenkontur, abgetragen, insbesondere durch Ätzverfahren, vorzugsweise unter Verwendung eines fluiden Ätzmittels.

Die Dicke D₁ der Grundstruktur 2 wird dabei mindestens um die Höhe h der Vertiefungen 4v abgetragen, so dass zumindest die nicht bedeckten Einzelstrukturen, insbesondere Erhebungen 4e, eine neue, insbesondere im wesentlichen einheitliche, Dicke D₂ aufweisen. Somit sind die selektierten Einzelstrukturen gebildet durch reduzierte Erhebungen 4e' und, insbesondere vollständig, reduzierte Vertiefungen 4v', deren Boden, insbesondere vollständig, durch das Trägersubstrat 3 gebildet wird.

In dem sich daran anschließenden Verfahrensschritt gemäß Figur 5 wird die Grundstruktur 2, insbesondere vollständig (also alle Gruppen 2.1 bis 2.n), also sowohl die selektierten als auch die nicht selektierten Einzelstrukturen, durch Beschichtungsmittel (Abscheidemittel) mit einem Beschichtungsmaterial 10 beschichtet. Als Beschichtungsmaterial 10 ist vorzugsweise ein Metall vorgesehen. Die Beschichtung erfolgt aus einer Richtung senkrecht zu der Oberfläche 3o des Trägersubstrats 3, an der die Grundstruktur 2 angeordnet ist. Somit werden senkrecht (oder im Wesentlichen senkrecht) zur Oberfläche 3o stehende Flächen, nämlich insbesondere Seitenwände 4s der Einzelstrukturen (die gleichzeitig die Vertiefungen 4v, 4v' bilden) nicht oder zumindest vernachlässigbar mit dem Beschichtungsmaterial 10 beschichtet. Je stärker eine Fläche gegenüber der Oberfläche 3o geneigt ist, desto weniger Beschichtungsmaterial 10 wird dort aufgetragen. Dies kann besonders gut an der tropfenförmigen Beschichtung des Fluids 8 erkannt werden, die zum immer steiler abfallenden Rand hin immer dünner wird. Die Beschichtungsmenge wird derart bemessen, dass eine Dicke d der Beschichtung kleiner als die Dicke D2 und/oder kleiner als die Höhe H der Erhebungen 4e' (gegebenenfalls reduzierte Höhe H') ist. Somit liegen die Seitenwände 4s zumindest teilweise frei.

Wie in Figur 6 gezeigt, wird die Grundstruktur 2 durch Mittel zum Lösen (hier durch ein Strippingverfahren) gelöst, so dass nur der direkt auf der Oberfläche 3o des Trägersubstrats 3 aufgebrachte Teil des Beschichtungsmaterials 10 auf dem Trägersubstrat 3 verbleibt, da dieses durch die Beschichtung mit der Oberfläche 3o verbunden ist und nicht wie die übrige Teilmenge des Beschichtungsmaterials 10 mit der Grundstruktur 2 oder dem Fluid 8 abgelöst/abgetragen/entfernt wird. Das Ablösen erfolgt vorzugsweise durch chemische Prozesse, insbesondere wenn es sich bei dem Beschichtungsmaterial 10 um ein Photoresist handelt. Die Mittel zum Lösen der Grundstruktur lösen die Grundstruktur 2 selektiv und greifen das Beschichtungsmaterial 10 vorzugsweise nicht an.

Das auf der Oberfläche 3o verbleibende Beschichtungsmaterial 10 entspricht der Form nach den selektierten Vertiefungen 4v und dieser Teil des Beschichtungsmaterials 10 bildet die Leseelemente 9.

Die Leseelemente 9 sind in jeder Gruppe 2.1 bis 2.n verschieden kodiert und als Resonator für RFID Chips verwendbar. Jede Gruppe 2.1 bis 2.n von Leseelementen 9 bildet somit eine kodierte Lesestruktur 11 mit einer geringen Dicke d.

Die Gruppen 2.1 bis 2.n mit der jeweils kodierten Lesestruktur 11 können, insbesondere nach einem Rückdünnprozess des Trägersubstrats 3, getrennt werden.

Somit ist auf einfache Art und Weise eine Vielzahl von unterschiedlich kodierten Lesestrukturen 11 herstellbar. Auf einem Trägersubstrat 3 können somit mehrere 100 Lesestrukturen 11 mit unterschiedlicher Kodierung hergestellt werden, wobei für jedes neue Trägersubstrat eine neue, individuelle Kodierung vorgesehen sein kann.

Die Grundstrukturen 2 und/oder die Lesestrukturen 11 können mittels unterschiedlicher Messmethoden wie optischer Mikroskopie, Rastertunnelmikroskopie, Rasteelektronenmikroskopie, AFM (Atomic Force Microscopy) oder MFM (Magnetic Force Microscopy) etc. vor der erfindungsgemäßen Methode, während oder nach der Durchführung der erfindungsgemäßen Methode inspiziert werden.

### Bezugszeichenliste

- 2: Grundstruktur
- 2.1 bis 2.n: Gruppen
- 3: Trägersubstrat
- 3o: Oberfläche
- 4v, 4v': Vertiefungen
- 4e, 4e': Erhebungen
- 4s: Seitenwände
- 6: Aufbringmittel
- 7: Düse
- 8: Fluid
- 9: Leseelemente
- 10: Beschichtungsmaterial
- 11: Lesestruktur
- D1: Dicke
- D2: Dicke
- d: Dicke
- h: Höhe
- H, H': Höhe
- B: Breite

## Patentansprüche

1. Vorrichtung zur Herstellung von individuell kodierten mechanischelektronischen binären Lesestrukturen (11), wobei die Lesestrukturen (11) Resonatoren zur Verwendung in RFID Chips sind, **dadurch gekennzeichnet, dass** die Vorrichtung die folgenden Einrichtungen umfasst:
- einer Strukturierungseinrichtung zur Erzeugung einer Grundstruktur (2) mit mindestens einer Gruppe (2.1 bis 2.n) von Einzelstrukturen (4v, 4e) auf einem Trägersubstrat (3), wobei die Strukturierungseinrichtung die Einzelstrukturen (4v, 4e) abwechselnd als Vertiefungen (4v) und Erhebungen (4e) erzeugend ausgebildet ist, und
- einer Bearbeitungseinrichtung zur Ausbildung mindestens einer jeweils individuell kodierten Lesestruktur (11) mit Leseelementen (9) aus einer Teilmenge einer Gesamtmenge der Einzelstrukturen (4v, 4e) jeder Gruppe (2.1 bis 2.n), wobei die Bearbeitungseinrichtung Aufbringmittel (6, 7) zur zumindest teilweisen Bedeckung einer nicht selektierten Restmenge der Gesamtmenge der Einzelstrukturen (4v, 4e) jeder Gruppe (2.1 bis 2.n) mit einem Fluid (8) aufweist, wobei die Bearbeitungseinrichtung Reduzierungsmittel zur Reduzierung der Dicke (D1) der Grundstruktur (2) aufweist, wobei die Bearbeitungseinrichtung Beschichtungsmittel zur Beschichtung eines zumindest teilweise die Lesestruktur (11) bildenden Beschichtungsmaterials (10) auf die Gruppen (2.1 bis 2.n) oder die Grundstruktur (2) aufweist, wobei die Bearbeitungseinrichtung Mittel zum Lösen der Grundstruktur (2) von dem Träger (3) aufweist, wobei die Bearbeitungseinrichtung so eingerichtet ist, dass jedes Leseelement (9) an je einer Einzelstruktur (4e, 4e', 4v, 4v') ausgebildet wird.

2. Vorrichtung nach Anspruch 1, wobei die Aufbringmittel (6, 7) mindestens einen Dispenser (6) aufweisen.

3. Verfahren zur Herstellung von individuell kodierten mechanischelektronischen binären Lesestrukturen (11), wobei die Lesestrukturen (11) Resonatoren zur Verwendung in RFID Chips sind, **dadurch gekennzeichnet, dass** es folgende Schritte umfasst:
- Erzeugung einer Grundstruktur (2) mit mindestens einer Gruppe (2.1 bis 2.n) von Einzelstrukturen (4v, 4e) auf einem Trägersubstrat (3) mittels einer Strukturierungseinrichtung, wobei die Einzelstrukturen (4e, 4v) von der Strukturierungseinrichtung abwechselnd als Vertiefungen (4v) und Erhebungen (4e) erzeugt werden, und
- Ausbildung mindestens einer jeweils individuell kodierten Lesestruktur (11) mit Leseelementen (9) aus einer selektierten oder selektierbaren Teilmenge einer Gesamtmenge der Einzelstrukturen (4v, 4e) jeder Gruppe (2.1 bis 2.n), wobei die Ausbildung der Lesestruktur (11) eine zumindest teilweise Bedeckung einer nicht selektierten Restmenge der Gesamtmenge der Einzelstrukturen (4e, 4v) jede Gruppe (2.1 bis 2.n) mit einem Fluid (8) durch Aufbringmittel umfasst, wobei jedes Leseelement (9) an je einer Einzelstruktur (4e, 4e', 4v, 4v') ausgebildet wird, wobei die Ausbildung der Lesestruktur folgende Schritte umfasst:
- Reduzierung der Dicke (D1) der Grundstruktur (2) durch Reduzierungsmittel,
- Beschichtung eines zumindest teilweise die Lesestruktur (11) bildenden Beschichtungsmaterials (10) und
- Lösen der Grundstruktur (2) von dem Trägersubstrat (3).

4. Verfahren nach Anspruch 3, bei dem aus jeder Gruppe (2.1 bis 2.n) je eine Lesestruktur (11) ausgebildet wird und jede Lesestruktur (11) unterschiedlich kodiert wird.

5. Lesestruktur (11), hergestellt nach einem Verfahren gemäß einem oder mehreren der Patentansprüche 3 bis 4 und/oder hergestellt durch eine Vorrichtung nach einem oder mehreren der Patentansprüche 1 bis 2.

## Claims

1. A device for producing individually coded mechanical-electronic binary read patterns (11), wherein the read patterns (11) are resonators for use in RFID chips, **characterized in that** the device comprises the following units:
- a structuring apparatus for producing a basic pattern (2) with at least one group (2.1 to 2.n) of individual patterns (4v, 4e) on a carrier substrate (3), wherein the structuring apparatus is made to produce the individual patterns (4v, 4e) in alternation as depressions (4v) and elevations (4e),
- a processing apparatus for forming from a subset of a total set of the individual patterns (4v, 4e) of each group (2.1 to 2.n) at least one read pattern (11) with read elements (9), each read pattern (11) being individually coded, wherein the processing apparatus has application means (6, 7) for at least partial covering of an unselected remaining number of the total number of individual patterns (4v, 4e) of each group (2.1 to 2.n) with a fluid (8), wherein the processing apparatus has reducing agents for reduction of the thickness (D₁) of the basic pattern (2), wherein the processing apparatus has coating means (10) for coating of a coating material (10) which at least partially forms the read pattern (11), on the groups (2.1 to 2.n) or the basic pattern (2), wherein the processing apparatus has means for dissolution of the basic pattern (2) from the carrier (3), wherein the processing apparatus is set up such that each read element (9) is made on one individual pattern (4e, 4e', 4v, 4v') at a time.

2. The device as claimed in Claim 1, wherein the application means (6, 7) have at least one dispenser (6).

3. A method for producing individually coded mechanical-electronic binary read patterns (11), wherein the read patterns (11) are resonators for use with RFID chips, **characterized in that** it comprises the following steps:
- producing a basic pattern (2) with at least one group (2.1 to 2.n) of individual patterns (4v, 4e) on a carrier substrate (3) by means of a structuring apparatus, wherein the individual patterns (4e, 4v) are produced by the structuring apparatus in alternation as depressions (4v) and elevations (4e),
- forming at least one individually coded read pattern (11) with read elements (9) from a selected or selectable subset of a total set of individual patterns (4v, 4e) of each group (2.1 to 2.n), wherein the formation of the read structure (11) comprises an at least partial covering of an unselected residual number of the total number of individual patterns (4e, 4v) of each group (2.1 to 2.n) with a fluid (8) by applications means, wherein each read element (9) is formed on one individual pattern (4e, 4e', 4v, 4v') at a time, wherein the formation of the read structure comprises the following steps:
- reduction of the thickness (D1) of the basic pattern (2) by reducing agents,
- coating of a coating material (10) which forms at least partially the read pattern (11) and
- dissolution of the basic pattern (2) from the carrier substrate (3).

4. The method as claimed in Claim 3, wherein one read pattern (11) at a time is formed from each group (2.1 to 2.n) and each read pattern (11) is coded differently.

5. A read pattern (11), produced according to a method as claimed in one or more of Claims 3 to 4 and/or produced by a device as claimed in one or more of Claims 1 to 2.

## Revendications

1. Dispositif pour la fabrication de structures de lecture (11) binaires mécano-électroniques codées individuellement, dans lequel les structures de lecture (11) sont des résonateurs destinés à être utilisés dans des puces RFID, **caractérisé en ce que** le dispositif comprend les dispositifs suivants :
- un dispositif de structuration pour produire une structure de base (2) comprenant au moins un groupe (2.1 à 2.n) de structures individuelles (4v, 4e) sur un substrat porteur (3), dans lequel le dispositif de structuration est conçu produisant les structures individuelles (4v, 4e) alternativement en tant que creux (4v) et rehaussements (4e), et
- un dispositif de traitement pour former au moins une structure de lecture (11) respective codée individuellement avec des éléments de lecture (9) à partir d'une quantité partielle d'une quantité totale des structures individuelles (4v, 4e) de chaque groupe (2.1 à 2.n), dans lequel le dispositif de traitement présente des moyens d'application (6, 7) pour recouvrir au moins partiellement une quantité restante non sélectionnée de la quantité totale des structures individuelles (4v, 4e) de chaque groupe (2.1 2.n) avec un fluide (8), dans lequel le dispositif de traitement présente des moyens de réduction pour réduire l'épaisseur (D1) de la structure de base (2), dans lequel le dispositif de traitement présente des moyens de revêtement pour le revêtement d'un matériau de revêtement (10) formant la structure de lecture (11) au moins partiellement, sur les groupes (2.1 2.n) ou la structure de base (2), dans lequel le dispositif de traitement présente des moyens pour séparer la structure de base (2) du support (3), dans lequel le dispositif de traitement est ainsi agencé que chaque élément de lecture (9) est formé sur une structure individuelle (4e, 4e', 4v, 4v').

2. Dispositif selon la revendication 1, dans lequel les moyens d'application (6, 7) présentent au moins un distributeur (6).

3. Procédé de fabrication de structures de lecture (11) binaires mécano-électroniques codées individuellement, dans lequel les structures de lecture (11) sont des résonateurs destinés à être utilisés dans des puces RFID, **caractérisé en ce qu'**il comprend les étapes suivantes :
- production d'une structure de base (2) avec au moins un groupe (2.1 à 2.n) de structures individuelles (4v, 4e) sur un substrat porteur (3) au moyen d'un dispositif de structuration, dans lequel les structures individuelles (4e, 4v) sont produites alternativement en tant que creux (4v) et rehaussements (4e) par le dispositif de structuration, et
- formation d'au moins une structure de lecture (11) respective codée individuellement avec des éléments de lecture (9) à partir d'une quantité partielle sélectionnée ou pouvant être sélectionnée d'une quantité totale des structures individuelles (4v, 4e) de chaque groupe (2.1 à 2.n), dans lequel la formation de la structure de lecture (11) comprend un recouvrement au moins partiel d'une quantité restante non sélectionnée de la quantité totale des structures individuelles (4e, 4v) de chaque groupe (2.1 à 2.n) avec un fluide (8), par des moyens d'application, dans lequel chaque élément de lecture (9) est formé sur une structure individuelle (4e, 4e', 4v, 4v') respective, dans lequel la formation de la structure de lecture comprend les étapes suivantes ;
- réduction de l'épaisseur (D1) de la structure de base (2) par des moyens de réduction,
- revêtement d'un matériau de revêtement (10) formant la structure de lecture (11) au moins partiellement et
- séparation de la structure de base (2) du substrat porteur (3).

4. Procédé selon la revendication 3, dans lequel une structure de lecture (11) respective est formée à partir de chaque groupe (2.1 à 2.n) et chaque structure de lecture (11) est codée de façon différente.

5. Structure de lecture (11) fabriquée selon un procédé selon une ou plusieurs des revendications de brevet 3 à 4 et/ou fabriquée par un dispositif selon l'une ou plusieurs des revendications de brevet 1 à 2.
